# FASCICULE DE BREVET EUROPEEN

(11) **EP 3 763 568 B1**
(45) Date de publication et mention de la délivrance du brevet: **31.05.2023**
(21) Numéro de dépôt: 20184571.6
(22) Date de dépôt: 07.07.2020
(51) Int. Cl.: B60P 1/56, B60P 1/00

(54) **BENNE ÉQUIPÉE D'UNE TRAPPE**
FÖRDERGEFÄSS, DAS MIT EINER KLAPPE AUSGESTATTET IST
SKIP PROVIDED WITH A HATCH

(30) Priorité: 08.07.2019 FR 1907625
(43) Date de publication de la demande: 13.01.2021
(73) Titulaire: CI 85 (Carrosserie Industrielle et Services), 85140 Essarts en Bocage (FR)
(72) Inventeur: ARNAUD, Bernard, 85140 Les Essarts (FR)
(74) Mandataire: Cabinet Chaillot

(56) Documents cités:
- FR-A- 715 988
- FR-A1- 3 059 281
- US-A- 4 359 176
- US-A- 5 272 987
- US-A- 6 059 372

## Description

La présente invention concerne le déchargement de matériaux en vrac à partir de bennes, en particulier, à partir de bennes à déchargement horizontal, également appelés bennes poussoir.

On connaît par la demande de brevet FR3059281, une benne poussoir, équipée d'un bouclier de poussée actionné par un vérin horizontal et comportant une ouverture fermée par une trappe dans la partie basse de la paroi de la benne, afin de décharger le matériau contenu dans la benne.

La trappe est reliée à pivotement à la benne de façon à passer de la position de fermeture à la position d'ouverture de l'ouverture, par pivotement de la trappe vers le bas, en particulier sous le poids du matériau contenu dans la benne.

Il serait souhaitable de disposer d'une autre solution pour pouvoir contrôler l'ouverture de la trappe. Lorsque la trappe s'ouvre par pivotement sous le poids du matériau contenu dans la benne, il est difficile de fermer la trappe à la demande à tout instant au cours de l'utilisation de la benne. En effet, tant que le bouclier poussoir pousse le matériau vers la paroi arrière, le matériau s'échappe par l'ouverture positionnée dans le fond de la benne et il est difficile de fermer la trappe, en particulier dans des cas d'urgences.

De plus il est souhaitable de pouvoir mieux diriger le matériau sortant de la benne pour pouvoir le guider vers l'emplacement où l'on souhaite le répartir.

La présente invention vise à résoudre les problèmes mentionnés ci-dessus et ainsi à proposer une solution grâce à laquelle le passage de la trappe en position d'ouverture à la position de fermeture de l'ouverture peut être réalisée facilement à tout instant de l'utilisation de la benne et également à faciliter le guidage du matériau sortant de la benne pour le diriger avec précision vers un emplacement choisi.

A cet effet, la présente invention porte sur une benne demi-ronde à fond poussoir pour le transport de matière, comportant, au voisinage de sa paroi latérale de fermeture opposée au fond poussoir, une trappe apte à passer d'une première position dans laquelle elle ferme une ouverture de décharge de matière pratiquée dans le fond de la benne à une seconde position dans laquelle elle dégage ladite ouverture permettant l'évacuation de la matière par gravité, caractérisée par le fait que la trappe est montée sous la benne, apte à coulisser selon la ligne longitudinale moyenne du fond de la benne, la trappe présentant une surface supérieure de même concavité que le fond de benne contre lequel elle coulisse.

La trappe peut être montée coulissante sous l'action d'un vérin dont le corps est fixé sous la benne à l'opposé de sa paroi arrière de fermeture et dont la tige est reliée à l'arrière de la trappe.

La trappe peut être de forme rectangulaire et être guidée latéralement par deux plaques latérales de guidage portées par l'extérieur du fond de benne, avantageusement avec interposition d'une lame de matériau favorisant le coulissement.

Les plaques de guidage peuvent être, côté extérieur, reliées à un dispositif longitudinal de renfort de coulissement par exemple par soudage, avantageusement relié extérieurement à un dispositif longitudinal de renfort de dessous de benne.

Une trémie de déchargement de matière, s'effilant vers le bas, peut être montée sous la benne de sorte que son ouverture d'entrée supérieure corresponde à l'ouverture pratiquée dans la partie inférieure de la benne.

La trémie peut être repliée vers l'extérieur le long des deux bords longitudinaux de son ouverture supérieure pour former des bandes de liaison avec les plaques correspondantes de guidage du coulissement de la trappe et/ou aux organes correspondants de dispositif longitudinal de renfort de coulissement desdites plaques, les bords latéraux avant et arrière pouvant être repliés vers le haut pour former des bandes de liaison respectivement avant et arrière avec des renforts transversaux de dessous de benne.

Les bords longitudinaux de la trappe et les plaques de guidage peuvent être inclinés vers l'intérieur, les plaques de guidage ayant une hauteur telle qu'elles pénètrent dans l'ouverture supérieure de la trémie.

Sur l'ouverture inférieure de la trémie, on peut monter de façon amovible un organe de liaison avec la partie supérieure d'une goulotte pour le guidage vers le bas de la matière sortant de la trémie, avec possibilité d'orienter la goulotte autour de l'ouverture inférieure de la trémie.

L'ouverture inférieure de la trémie peut être circulaire et présenter un repli d'équerre vers l'extérieur, l'organe de liaison étant constitué par une plaque rectangulaire dont un côté est arrondi en demi-cercle et qui présente une ouverture circulaire correspondant à l'ouverture inférieure de la trémie, les bords latéraux et arrière de ladite plaque étant repliés deux fois d'équerre pour former une rainure apte à recevoir avec jeu le repli d'équerre de la trémie.

Pour mieux illustrer l'objet de la présente invention, on va en décrire ci-après, à titre indicatif et non limitatif, un mode de réalisation particulier, avec référence au dessin annexé.

Sur ce dessin :
- [Fig. 1] est une vue partielle en perspective d'une benne demi-ronde à fond poussoir, dont on a représenté la région centrale de la partie inférieure, la paroi latérale de fermeture de la benne à l'arrière de celle-ci et la région voisine de cette paroi n'ayant pas été représentées et la trémie de décharge de la matière transportée par la benne étant représentée en coupe selon son plan vertical moyen ;
- [Fig. 2] est une vue de face correspondant à la Figure 1 ;

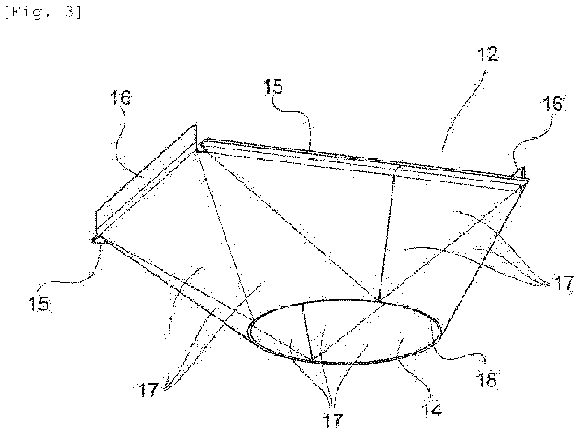

- [Fig. 3] est une vue en perspective de la trémie de décharge de la matière transportée, son ouverture de sortie étant vue à sa partie inférieure ;

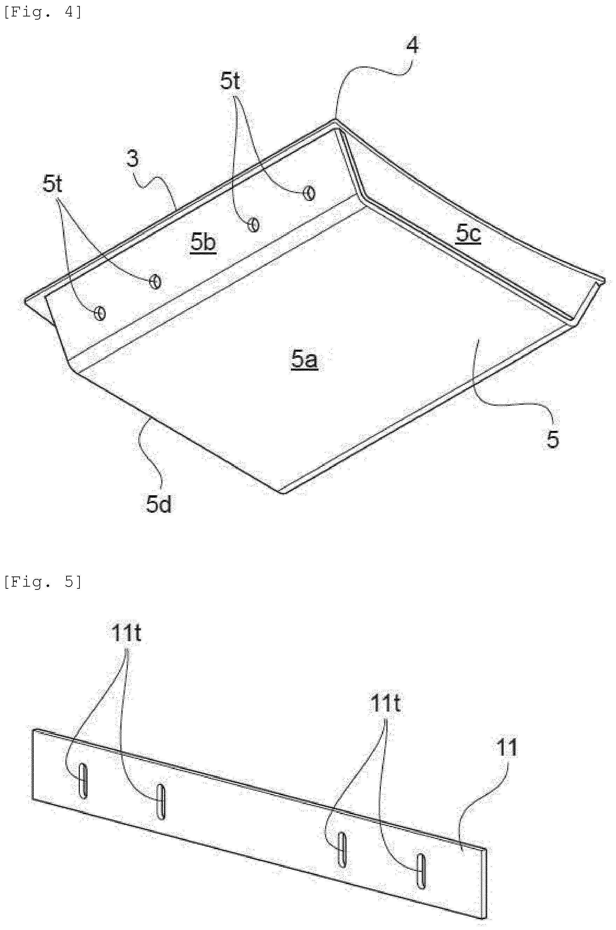

- [Fig. 4] est une vue en perspective de la trappe qui équipe la benne demi-ronde de la Figure 1 ;
- [Fig. 5] est une vue en perspective d'une plaque latérale de guidage de la trappe dans son mouvement de coulissement ;
- [Fig. 6] est une vue en perspective d'un organe de liaison d'une goulotte de déchargement orientable avec la partie inférieure de la trémie, la partie haute de cette goulotte étant représentée sur cette figure ;
- [Fig. 7] est une vue de dessus dudit organe de liaison ; et
- [Fig. 8] est une vue de face de l'organe de liaison en place sur la partie haute de la goulotte.

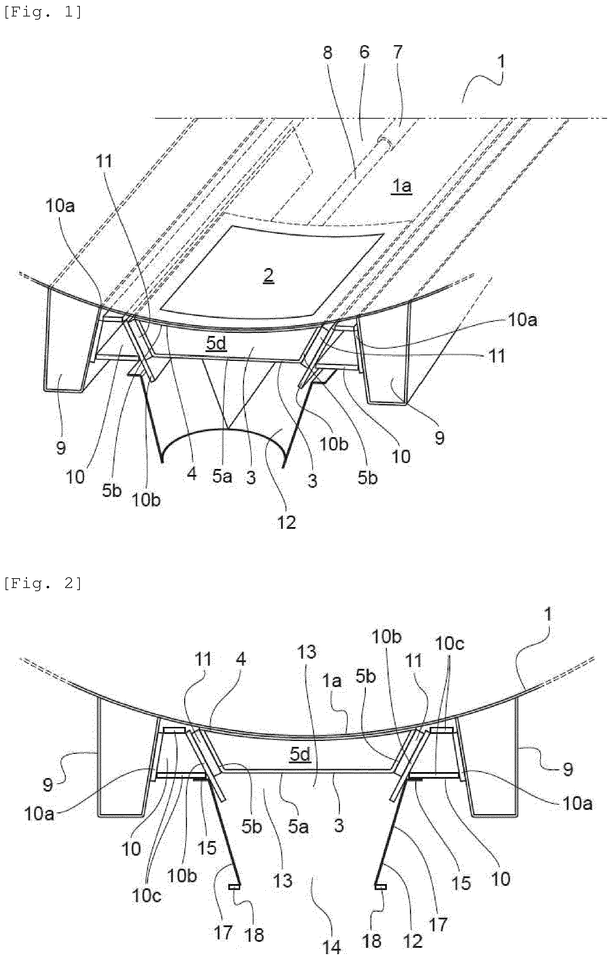

Si l'on se réfère tout d'abord à la Figure 1, on peut voir que l'on a représenté une benne poussoir 1 au niveau de sa région centrale de fond de benne, la porte arrière n'ayant pas été représentée.

La benne poussoir 1 est une benne à paroi interne semi-cylindrique. C'est une benne ouverte en partie supérieure et formée par une partie centrale 1a de section transversale cintrée en forme de demi-cercle. La benne possède une paroi avant et à l'opposé de la paroi avant une porte arrière (non représentées).

La benne 1 est une benne poussoir et possède un bouclier de poussée, non représenté, qui possède un corps de poussée et un vérin de déplacement du corps de poussée. Le vérin est rendu solidaire de la partie avant de la benne poussoir 1 par tout moyen de fixation approprié. Le vérin de déplacement permet de déplacer le bouclier en translation vers l'arrière et l'avant de la benne.

Sur la partie centrale 1a de la benne 1 et au voisinage de sa partie arrière à l'opposé de la paroi avant, une ouverture 2 est formée dans le fond de la partie centrale 1a, à savoir au niveau du sommet de la partie cintrée centrale de la benne 1.

L'ouverture 2 est réalisée par découpe, et dans l'exemple représenté, elle est de forme carrée. L'ouverture 2 peut également présenter d'autres formes, telles que rectangulaire, circulaire, etc.

Afin de pouvoir obturer l'ouverture 2 de la benne 1, une trappe 3 est montée sous cette dernière et est apte à coulisser selon la ligne longitudinale moyenne du fond de la benne entre une position dans laquelle l'ouverture 2 est fermée par ladite trappe 3 et une position dans laquelle l'ouverture 2 est complètement dégagée.

La trappe 3 comporte une plaque supérieure 4 de forme rectangulaire et qui présente la même concavité que le fond de la partie centrale 1a de la benne. En utilisation, la plaque supérieure 4 de la trappe 3 viendra en contact avec la partie extérieure du fond de la partie centrale 1a de la benne.

Sous la plaque supérieure 4, la trappe 3 comporte un corps 5 de trappe. Le corps 5 comporte une plaque inférieure 5a qui se prolonge le long de ses deux bords longitudinaux par deux plaques latérales 5b. Chaque plaque latérale 5b forme un angle ouvert avec la plaque inférieure 5a de telle sorte que la section transversale du corps 5 de trappe présente une forme en U évasé dont la base est plate.

Chaque plaque latérale 5b est percée de quatre trous 5t et dont le rôle sera indiqué plus bas.

Le corps 5 de trappe est fermé par deux plaques 5c et 5d qui sont soudées le long des bordures extérieures respectives de la plaque inférieure 5a et des plaques latérales 5b. Les plaques 5c et 5d possède une bordure supérieure destinée à venir contre la plaque supérieure 4 et qui présente donc une concavité identique à celle de la plaque supérieure 4.

Le corps 5 de trappe est ensuite fixé à la plaque supérieure 4 par soudage, les bordures supérieures des plaques 5c et 5d suivant la partie cintrée de la plaque supérieure 4 et les bordures supérieures des plaques latérales 5b suivant la direction longitudinale de la plaque supérieure 4.

La plaque supérieure 4 et le corps de trappe 5 de la trappe 3 ont des dimensions telles que la plaque 5c vient à fleur de la bordure extérieure cintrée de la plaque supérieure 4. Les bordures supérieures des plaques latérales 5b et de la plaque 5d sont soudées à distance des bordures extérieures respectives de la plaque supérieure 4.

Le déplacement de la trappe 3 entre la position où elle ferme l'ouverture 2 et la position où elle la dégage est assurée par un vérin 6. Le vérin 6 comporte un corps cylindrique 7 porté par le dessous de la benne 1 et dans lequel se déplace une tige 8, le long de la direction longitudinale de la benne 1.

L'extrémité libre de la tige 8 est fixée sur la plaque 5c du corps 5 de la trappe 3. La tige 8 permet donc de déplacer la trappe entre la position fermée et la position ouverte.

Des renforts 9 de dessous de benne en U sont également placés sous la benne 1. Sur les parois internes des renforts 9, sont fixés des renforts de coulissement 10.

Chaque renfort de coulissement 10 comporte une première plaque 10a qui est soudée sur la paroi longitudinale intérieure du renfort 9 de dessous de benne. Le renfort de coulissement 10 comporte également une plaque latérale de guidage 10b.

La plaque latérale 10b de guidage est fixée à la plaque 10a par deux plaques de fixation 10c qui sont soudées à la fois aux plaques 10a et 10b.

Chaque plaque latérale de guidage 10b est inclinée vers l'intérieur de telle sorte qu'elle est sensiblement parallèle à la plaque latérale respective 5b du corps 5 de la trappe 3.

Une lame de glissement 11 est fixée sur la partie extérieure de chaque plaque latérale 5b du corps 5 de la trappe 3. La lame de glissement 11 est fait en un matériau permettant de faciliter le déplacement de la trappe 3 et est par exemple en polytétrafluoroéthylène (PTFE - Téflon).

La lame de glissement 11 est percée de quatre trous 11t. Les trous 11t, correspondant aux trous 5t formés sur chaque plaque latérale 5b du corps 5 de trappe, permettront de fixer chaque lame de glissement 11b sur la plaque latérale 5b respective par exemple par boulonnage.

En utilisation, lors du déplacement de la trappe 3, chaque la lame de glissement 11 portée par la plaque latérale 5b respective vient glisser contre la plaque latérale de guidage 10b respective des renforts de coulissement 10.

La lame de glissement 11 facilite le coulissement de la trappe 3 qui est guidée par chaque plaque de guidage 10b des renforts de coulissement 10 pour fermer ou dégager l'ouverture 2.

La benne 1 comporte également une trémie 12 de déchargement de matière qui est montée sous la benne 1 de sorte que l'ouverture de la trémie 12 corresponde à l'ouverture 2 pratiquée dans la benne 1.

La trémie 12 comporte donc une ouverture supérieure 13 et s'effile vers le bas vers une ouverture inférieure 14. Dans l'exemple représenté, l'ouverture supérieure 13 est rectangulaire et l'ouverture inférieure 14 est circulaire.

La trémie 12 est repliée vers l'extérieur le long de deux bords longitudinaux parallèles de l'ouverture supérieure 13 pour former des bandes de liaison 15. Les bords latéraux avant et arrière de l'ouverture supérieur 13 de la trémie 12 sont repliés vers le haut pour former des bandes de liaison 16. Les bandes de liaison 16 peuvent coopérer avec des renforts transversaux de dessous de benne (non représentés).

Chaque bande de liaison 15 est fixée par boulonnage sur la plaque inférieure 10c respective de chaque renfort de coulissement 10 et la bordure de l'ouverture supérieure 12 vient en contact contre la partie extérieure de la plaque latérale de guidage 10b, chaque plaque latérale de guidage 10b pénétrant dans l'ouverture supérieure 13 de la trémie 12.

Les ouvertures supérieure 13 et inférieure 14 de la trémie 12 sont reliées l'une à l'autre par un ensemble de plaques 17.

L'ouverture inférieure 14 de la trémie 12 présente un retour d'équerre vers l'extérieur 18 dont le rôle sera indiqué plus bas.

En utilisation de la benne 1, le bouclier poussoir permet de pousser les matériaux contenus dans la benne 1 vers la paroi arrière de la benne.

Comme la benne 1 est demi-ronde, les matériaux contenus dans la benne 1 sont guidés vers la partie centrale 1a de la benne 1 par gravité.

Pour que les matériaux puissent s'échapper de la benne 1, la trappe 3 est déplacée dans sa position permettant de dégager l'ouverture 2 par action du vérin 6. Les matériaux passent alors par l'ouverture 2 et sont guidés par la trémie 12, par exemple vers une brouette que l'utilisateur aura pris soin de placer sous l'ouverture inférieure 14 de la trémie 12 avant de procéder au dégagement de l'ouverture 2.

Afin d'encore mieux guider les matériaux quittant la trémie 12, il est possible de positionner à la sortie de la trémie 12, divers dispositifs peuvent être montés sur la trémie 12.

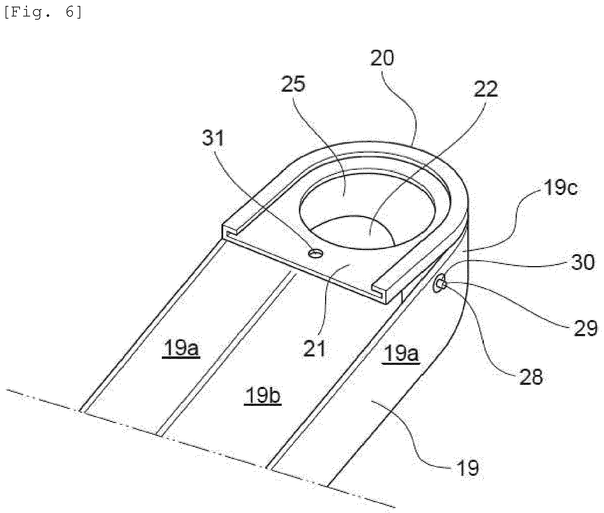

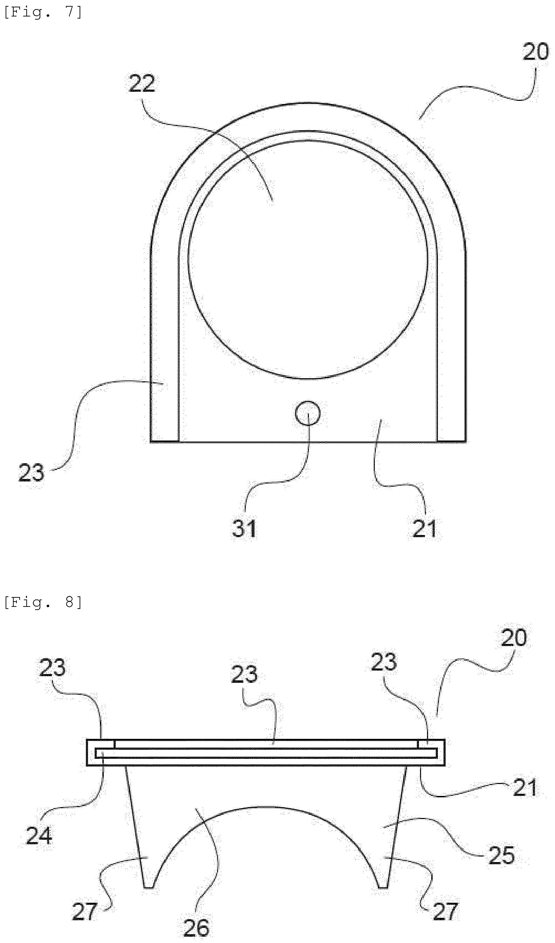

On se réfère maintenant aux Figures 6 à 8 sur lesquelles on a représenté une goulotte 19 et son organe de liaison 20 à la trémie 12.

La goulotte 19 comporte deux parois longitudinales parallèles 19a qui se prolongent vers le bas et son reliées l'une à l'autre par un fond arrondi 19b. A l'une des extrémités de la goulotte 19, à l'opposé de son extrémité libre de déchargement de matériaux, les parois longitudinales 19a et le fond arrondi 19b se prolongent en une paroi latérale arrondie 19c.

L'organe de liaison 20 comporte une plaque rectangulaire 21 dont l'un des côtés est arrondi. La plaque 21 présente une ouverture circulaire 22 correspondant à l'ouverture inférieur 14 de la trémie 12.

Les bords longitudinaux et le bord latéral arrondi de la plaque 21 sont repliés deux fois d'équerre pour former une bordure 23 en forme de U. La plaque 21 et la bordure 23 forment alors une rainure 24 dont le rôle sera indiqué plus bas.

La plaque 21 comporte sous celle-ci et dans le prolongement de l'ouverture 22, une jupe 25 tronconique qui se prolonge vers le bas en s'effilant. La jupe 25 est ajourée selon une première bordure 26 avant et une seconde bordure arrière (non représentée) afin de former deux ailes 27.

L'organe de liaison 20 est assemblé à la goulotte 19, chaque aile 27 étant fixée à la paroi latérale 19a respective de la goulotte 19 par boulonnage avec un ensemble de boulon 28 constituée d'une vis 29 traversant l'aile 27 et la paroi latérale 19a et d'un écrou 30.

Afin d'installer la goulotte 19 sur la trémie 12, on vient placer l'organe de liaison 20 par son extrémité libre en contact avec le retour d'équerre 18 de l'ouverture inférieure 14 de la trémie 12. Puis on fait glisser l'organe de liaison 20 contre ledit retour d'équerre 18 de telle sorte que le retour d'équerre 18 est reçu dans la rainure 24 de l'organe de liaison, jusqu'à ce que l'ouverture inférieure 14 de la trémie 12 corresponde avec l'ouverture 22 de l'organe de liaison.

Afin de bloquer l'organe de liaison 20 une fois ce dernier en place sur la trémie 12, ce dernier possède un trou 31 dans lequel on viendra placer une goupille (non représentée) qui permettra de venir bloquer les déplacements en translation de l'organe de liaison 20, mais en permettant à l'organe de liaison 20 de bouger en rotation par rapport à la trémie 12.

En faisant ainsi, un utilisateur peut canaliser le flux de matériaux sortant de la benne 1 qui sera guidé par la goulotte 19 vers un emplacement précis. De plus comme la goulotte peut être déplacée en rotation par rapport à l'axe central de la trémie 12, il est possible de choisir avec précision l'endroit où l'on souhaite déverser les matériaux contenus dans la benne 1.

## Revendications

1. - Benne demi-ronde à fond poussoir (1) pour le transport de matière, comportant, au voisinage de sa paroi latérale de fermeture opposée au fond poussoir, une trappe (3) apte à passer d'une première position dans laquelle elle ferme une ouverture (2) de décharge de matière pratiquée dans le fond de la benne (1) à une seconde position dans laquelle elle dégage ladite ouverture (2) permettant l'évacuation de la matière par gravité, la trappe étant montée sous la benne, et présentant une surface supérieure de même concavité que le fond de benne contre lequel elle coulisse,
**caractérisée par le fait que** la trappe est apte à coulisser selon la ligne longitudinale moyenne du fond de la benne.

2. - Benne selon la revendication 1, **caractérisée par le fait que** la trappe (3) est montée coulissante sous l'action d'un vérin (6) dont le corps (7) est fixé sous la benne (1) à l'opposé de sa paroi arrière de fermeture et dont la tige (8) est reliée à l'arrière de la trappe (3).

3. - Benne selon l'une des revendications 1 et 2, **caractérisée par le fait que** la trappe (3) est de forme rectangulaire et est guidée latéralement par deux plaques latérales de guidage (10b) portées par l'extérieur du fond de benne (1), avantageusement avec interposition d'une lame (11) de matériau favorisant le coulissement.

4. - Benne selon la revendication 3, **caractérisée par le fait que** les plaques de guidage (10b) sont, côté extérieur, reliées à un dispositif longitudinal de renfort de coulissement (10) par exemple par soudage, avantageusement relié extérieurement à un dispositif longitudinal de renfort (9) de dessous de benne (1).

5. - Benne selon l'une des revendications 1 à 4, **caractérisée par le fait qu'**une trémie (12) de déchargement de matière, s'effilant vers le bas, est montée sous la benne (1) de sorte que son ouverture d'entrée supérieure (13) corresponde à l'ouverture (2) pratiquée dans la partie inférieure de la benne (1).

6. - Benne selon la revendication 5, **caractérisée par le fait que** la trémie (12) est repliée vers l'extérieur le long des deux bords longitudinaux de son ouverture (12) supérieure pour former des bandes de liaison (15) avec les plaques (10b) correspondantes de guidage du coulissement de la trappe (3) et/ou aux organes correspondants de dispositif longitudinal de renfort de coulissement (10) desdites plaques, les bords latéraux avant et arrière pouvant être repliés vers le haut pour former des bandes de liaison (16) respectivement avant et arrière avec des renforts transversaux de dessous de benne.

7. - Benne selon la revendication 6, **caractérisée par le fait que** les bords longitudinaux (5b) de la trappe (3) et les plaques de guidage (10b) sont inclinés vers l'intérieur, les plaques de guidage (10b) ayant une hauteur telle qu'elles pénètrent dans l'ouverture supérieure (13) de la trémie (12).

8. - Benne selon l'une des revendications 5 à 7, **caractérisée par le fait que**, sur l'ouverture inférieure (14) de la trémie (12), est apte à être monté de façon amovible un organe de liaison (20) avec la partie supérieure d'une goulotte (19) pour le guidage vers le bas de la matière sortant de la trémie (12), avec possibilité d'orienter la goulotte (19) autour de l'ouverture inférieure (14) de la trémie (12).

9. - Benne selon la revendication 8, **caractérisée par le fait que** l'ouverture inférieure (14) de la trémie (12) est circulaire et présente un repli d'équerre (18) vers l'extérieur, l'organe de liaison (20) étant constitué par une plaque rectangulaire (21) dont un côté est arrondi en demi-cercle et qui présente une ouverture circulaire (22) correspondant à l'ouverture inférieure (14) de la trémie (12), les bords latéraux et arrière de ladite plaque étant repliés deux fois d'équerre pour former une rainure (24) apte à recevoir avec jeu le repli d'équerre (18) de la trémie (12).

## Patentansprüche

1. - Halbrundes Fördergefäß mit Schiebeboden (1) für den Transport von Material, umfassend, benachbart seiner seitlichen Verschlusswand gegenüber dem Schiebeboden, eine Klappe (3), die ausgelegt ist, um aus einer ersten Position, in der sie eine Öffnung (2) zum Entladen von Material schließt, die im Boden des Fördergefäßes (1) angebracht ist, in eine zweite Position überzugehen, in der sie diese Öffnung (2) frei macht, wodurch die Entleerung des Materials durch Schwerkraft ermöglicht wird, wobei die Klappe unter dem Fördergefäß montiert ist und eine höhere Fläche mit der gleichen Konkavität wie der Boden des Fördergefäßes aufweist, gegen den sie gleitet, **dadurch gekennzeichnet, dass** die Klappe ausgelegt ist, um gemäß der mittleren Längslinie des Bodens des Fördergefäßes zu gleiten.

2. - Fördergefäß nach Anspruch 1, **dadurch gekennzeichnet, dass** die Klappe (3) gleitend unter der Einwirkung eines Zylinders (6) montiert ist, deren Körper (7) unter dem Fördergefäß (1) gegenüber seiner hinteren Verschlusswand montiert ist, und deren Stift (8) mit der Hinterseite der Klappe (3) verbunden ist.

3. - Fördergefäß nach einem der Ansprüche 1 und 2, **dadurch gekennzeichnet, dass** die Klappe (3) eine rechtwinklige Form aufweist und seitlich von zwei seitlichen Führungsplatten (10b) geführt wird, die von der Außenseite des Bodens des Fördergefäß es (1) getragen werden, vorteilhafterweise durch Zwischenstellung einer Lamelle (11) aus Material, das das Gleiten begünstigt.

4. - Fördergefäß nach Anspruch 3, **dadurch gekennzeichnet, dass** die Führungsplatten (10b) an der äußeren Seite mit einer längs gerichteten Vorrichtung zur Verstärkung des Gleitens (10) verbunden sind, z. B. durch Schweißen, vorteilhafterweise außen verbunden mit einer längs gerichteten Verstärkungsvorrichtung (9) an der Unterseite des Fördergefäßes (1).

5. - Fördergefäß nach einem der Ansprüche 1 bis 4, **dadurch gekennzeichnet, dass** ein Trichter (12) zur Entladung von Material, der sich nach unten zuspitzt, unter dem Fördergefäß (1) montiert ist, so dass seine obere Eingangsöffnung (13) der Öffnung (2) entspricht, die im unteren Teil des Fördergefäßes (1) angebracht ist.

6. - Fördergefäß nach Anspruch 5, **dadurch gekennzeichnet, dass** der Trichter (12) nach außen entlang zwei längs gerichteten Rändern seiner oberen Öffnung (12) gefaltet ist, um Verbindungsbänder (15) mit den entsprechenden Platten (10b) zur Führung des Gleitens des Klappe (3) und/oder mit den entsprechenden Organen der längs gerichteten Vorrichtung zur Verstärkung des Gleitens (10) der Platten zu bilden, wobei die vorderen und hinteren Seitenränder nach oben gefaltet werden können, um das vordere bzw. das hintere Verbindungsband (16) mit Querverstärkungen der Unterseite des Fördergefäßes zu bilden.

7. - Fördergefäß nach Anspruch 6, **dadurch gekennzeichnet, dass** die längs gerichteten Ränder (5b) der Klappe (3) und die Führungsplatten (10b) nach innen geneigt sind, wobei die Führungspatten (10b) eine derartige Höhe aufweisen, dass sie in die obere Öffnung (13) des Trichters (12) eindringen.

8. - Fördergefäß nach einem der Ansprüche 5 bis 7, **dadurch gekennzeichnet, dass** auf der unteren Öffnung (14) des Trichters (12) auf entfernbare Weise ein Verbindungsorgan (20) mit dem oberen Teil einer Rinne (19) montiert werden kann, um das Material, das aus dem Trichter (12) austritt, nach unten zu führen, mit der Möglichkeit, die Rinne (19) um die untere Öffnung (14) des Trichters (12) auszurichten.

9. - Fördergefäß nach Anspruch 8, **dadurch gekennzeichnet, dass** die untere Öffnung (14) des Trichters (12) kreisförmig ist und einen rechtwinkligen Falz (18) nach außen aufweist, wobei das Verbindungsorgan (20) aus einer rechtwinkligen Platte (21) besteht, von der eine Seite zum Halbkreis abgerundet ist, und die eine kreisförmige Öffnung (22) aufweist, die der unteren Öffnung (14) des Trichters (12) entspricht, wobei die seitlichen und hinteren Ränder der Platte zweimal rechtwinklig gefaltet sind, um eine Nut (24) zu bilden, die ausgelegt ist, um mit einem Spiel den rechtwinkligen Falz (18) des Trichters (12) aufzunehmen.

## Claims

1. - A half-round skip (1) with a pusher bottom for transporting material, including, near its lateral closing wall opposite the pusher bottom, a hatch (3) able to go from a first position in which it closes an opening (2) for unloading material formed in the bottom of the skip (1) to a second position in which it frees said opening (2) allowing the material to be discharged by gravity, the hatch being mounted under the skip, and having an upper surface of the same concavity as the bottom of the skip against which it slides, **characterised in that** the hatch is able to slide along the longitudinal midline of the bottom of the skip.

2. - The skip according to claim 1, **characterised in that** the hatch (3) is mounted sliding under the action of a cylinder (6) whose body (7) is fixed under the skip (1) opposite its rear closing wall and whose rod (8) is connected to the rear of the hatch (3).

3. - The skip according to one of claims 1 and 2, **characterised in that** the hatch (3) is rectangular in shape and is guided laterally by two lateral guide plates (10b) that are carried by the outside of the bottom of the skip (1), advantageously with an interposed blade (11) of material favoring the sliding.

4. - The skip according to claim 3, **characterised in that** the guide plates (10b) are, on the outer side, connected to a longitudinal sliding reinforcement device (10), for example by welding, advantageously outwardly connected to a longitudinal reinforcement device (9) for the underside of the skip (1).

5. - The skip according to one of claims 1 to 4, **characterised in that** a hopper (12) for unloading material, tapering downward, is mounted under the skip (1) such that its upper inlet opening (13) corresponds to the opening (2) provided in the lower part of the skip (1).

6. - The skip according to claim 5, **characterised in that** the hopper (12) is folded outward along two longitudinal edges of its upper opening (12) to form connecting strips (15) for connecting with the corresponding guide plates (10b) for guiding the sliding of the hatch (3) and/or the corresponding members of the longitudinal sliding reinforcement device (10) of said plates, wherein the front and rear lateral edges may be folded upward to form respective front and rear connecting strips (16) for connecting with transverse reinforcements of the underside of the skip.

7. - The skip according to claim 6, **characterised in that** the longitudinal edges (5b) of the hatch (3) and the guide plates (10b) are tilted inward, the guide plates (10b) having a height such that they penetrate into the upper opening (13) of the hopper (12).

8. - The skip according to one of claims 5 to 7, **characterised in that** a connecting member (20) for connecting with the upper part of a channel (19) is able to be removable mounted on the lower opening (14) of the hopper (12), so as to guide the material leaving the hopper (12) downward, with the possibility of orienting the channel (19) around the lower opening (14) of the hopper (12).

9. - The skip according to claim 8, **characterised in that** the lower opening (14) of the hopper (12) is circular and has an outward right-angle fold (18), the connecting member (20) being made up of a rectangular plate (21) whereof one side is rounded in a half-circle and which has a circular opening (22) corresponding to the lower opening (14) of the hopper (12), the lateral and rear edges of said plate being right-angle folded twice to form a groove (24) that is able to receive with play the right-angle fold (18) of the hopper (12).
